# EUROPEAN PATENT APPLICATION

(11) **EP 4 447 461 A1**
(43) Date of publication of application: **16.10.2024**
(21) Application number: 22904187.6
(22) Date of filing: 05.12.2022
(51) Int. Cl.: H04N 21/236, H04H 20/28, H04H 40/18, H04N 19/30, H04N 19/46, H04N 21/2662

(54) **DELIVERY DEVICE AND RECEIVING DEVICE**

(30) Priority: 06.12.2021 JP 2021197475; 06.12.2021 JP 2021197478
(71) Applicant: Nippon Hoso Kyokai, Tokyo 150-8001 (JP)
(72) Inventor: ICHIGAYA, Atsuro, Tokyo 157-8510 (JP); KONDO, Yuichi, Tokyo 157-8510 (JP); NEMOTO, Shimpei, Tokyo 157-8510 (JP); IWAMURA, Shunsuke, Tokyo 157-8510 (JP)
(74) Representative: SSM Sandmair
(86) International application number: PCT/JP2022/044714
(87) International publication number: WO 2023/106259

(57) **Abstract**

A transmitter apparatus used in a video distribution system includes: first encoding means configured to output a first stream in multi-stream encoding; second encoding means configured to output a second stream in the multi-stream encoding; and multiplexing means configured to multiplex and output the first stream and the second stream. The first encoding means outputs encoded data obtained by encoding a main video image as the first stream. The second encoding means outputs encoded data obtained by encoding a partial presentation area to be presented by being added to the main video image as the second stream.

## Description

### TECHNICAL FIELD

The present disclosure relates to a transmitter apparatus and a receiver apparatus used in a video distribution system.

### BACKGROUND ART

Conventionally, in an OTT (Over The Top) service which is a video distribution service using communication, in order to realize a high quality service in a limited transmission band, video images encoded by a pre-encoding scheme by non-real-time encoding such as 2-pass encoding are distributed.

On the other hand, in a video distribution service represented by broadcasting, since immediacy as a news medium is considered as important, video images are distributed by video encoding by real-time encoding. Thus, news regarding an incident or a disaster which has happened in real time can be superimposed on a program video image. As a representative service, information called an emergency earthquake report and information called a news flash are added or the like. Therefore, in the video distribution service like broadcasting, video transmission using pre-encoded data is not performed. On the other hand, in the OTT service, such addition services are not realized. Note that information added on the program video image (that is, a main video image) is referred to as "additional information".

Further, in the video transmission of the broadcasting until now, a mode which can transmit only one video image in one channel has been basically used. For example, in an encoding scheme called HEVC (High Efficiency Video Coding) used in current 4K8K satellite broadcasting, video images are transmitted using an encoding tool group called a Main 10 profile (for example, see Non Patent Literature 1).

In addition, in the HEVC, there is a tool group called a Scalable Main 10 profile that transmits a plurality of video images in a layer shape. This is a mechanism of encoding capable of superimposing additional video images as a high-order layer while transmitting video images corresponding to the Main 10 profile as a basic layer. Similarly, also in VVC (Versatile Video Coding; see Non Patent Literature 2) which is a latest encoding scheme, in addition to the Main 10 profile, a Multilayer Main 10 profile that realizes video transmission of a plurality of layers has been developed. Further, in recent years, an encoding scheme of adding a new layer to video signals encoded by an existing encoding scheme such as LCEVC (ISO/IEC 23094-2) is also standardized, and needs for the video transmission of the plurality of layers are increasing.

In a technology of such scalable encoding, a base layer (BL: Base Layer) is a base stream, and the differential video image is transmitted as an enhancement layer (EL: enhancement Layer). The scalable encoding is sometimes referred as multilayer encoding or hierarchical encoding. A receiving side can combine and decode a base layer and an enhancement layer in addition to decoding of the base layer alone. Alternatively, the receiving side can decode the enhancement layer alone. Such encoding using a plurality of encoding streams is referred to as "multi-stream encoding".

A first application example of scalable encoding is SNR scalable that realizes video services of different qualities (low quality, high quality) by transmitting an enhancement layer for quality improvement to a base layer. A second application example is spatial scalable that transmits an enhancement layer (high resolution video image) for resolution improvement to a base layer (low resolution video image). According to the space scalable, broadcasting services of different resolutions such as a set of 2K video images and 4K video images and a set of 4K video images and 8K video images can be efficiently and simultaneously transmitted. A third application example is temporal scalable (Temporal Scalable) that transmits an enhancement layer for frame rate improvement to a base layer. In the HEVC and the VVC, the temporal scalable is realized as a function of a Main profile, and 60 P (including 59.94 P) and 120 P (including 119.88 P) can be simultaneously transmitted for example.

### CITATION LIST

### NON PATENT LITERATURE

Non Patent Literature 1: Recommendation ITU-T H.265 v7 (11/2019) "High efficiency video coding"
Non Patent Literature 2: Recommendation ITU-T H.266 (08/2020) "Versatile video coding"
Non Patent Literature 3: ISO/IEC 23094-2 "Information technology - General video coding - Part 2: Low complexity enhancement video coding"

### DISCLOSURE OF INVENTION

A transmitter apparatus according to a first feature is used in a video distribution system. The transmitter apparatus includes: first encoding means configured to output a first stream in multi-stream encoding; second encoding means configured to output a second stream in the multi-stream encoding; and multiplexing means configured to multiplex and output the first stream and the second stream. The first encoding means outputs encoded data obtained by encoding a main video image as the first stream. The second encoding means outputs encoded data obtained by encoding a partial presentation area to be presented by being added to the main video image as the second stream.

A receiver apparatus according to a second feature is used in a video distribution system. The receiver apparatus includes: acquisition means configured to acquire a first stream and a second stream in multi-stream encoding; and decoding means configured to decode each of the first stream and the second stream. The first stream is data obtained by encoding a main video image. The second stream is encoded data obtained by encoding a partial presentation area to be presented by being added on the main video image.

### BRIEF DESCRIPTION OF DRAWINGS

Fig. 1 is a diagram illustrating a video distribution system according to first and second embodiments.
Fig. 2 is a diagram illustrating a configuration example of a transmitter apparatus according to the first embodiment.
Fig. 3 is a diagram illustrating an operation example of an additional information superimposer according to the first embodiment.
Fig. 4 is a diagram illustrating a configuration example of a receiver apparatus according to the first embodiment.
Fig. 5 is a diagram illustrating a configuration example of a transmitter apparatus according to the second embodiment.
Fig. 6 is a diagram illustrating an operation example of an area setter according to the second embodiment.
Fig. 7 is a diagram illustrating a configuration example of a receiver apparatus according to the second embodiment.
Fig. 8 is a diagram illustrating an operation example of a decoder according to the second embodiment.

### DESCRIPTION OF EMBODIMENTS

Real-time encoding is for immediately encoding and transmitting an input video signal, and since processing time for optimizing encoding quality is limited, optimization in encoding processing is generally performed by processing simplified so as to be performed in a range capable of real-time processing. Therefore, as compared with a system which realizes encoding while performing the optimization taking sufficient time for prior analysis like a non-real-time encoder, the real-time encoding has a tendency that quality degradation called encoding degradation is relatively large or a size of an encoded signal becomes large.

On the other hand, when encoding efficiency is considered as important and a pre-encoding scheme is used, encoded data for broadcasting is generated beforehand. Therefore, when superimposing and transmitting additional information other than video images prepared in advance, it is needed to decode pre-encoded data before transmitting it, synthesize an additional video image and performing encoding again by real-time processing, and the encoding quality declines. Here, when transmitting the pre-encoded data, processing time required for encoding processing is not taken into consideration, and it is difficult to add addition processing for addition to a system. Further, since it is also difficult to perform switching so as not to cause discontinuity of signals with encoded data of real-time encoding by an encoding condition different from a pre-encoded code stream before and after the switching of the additional information, even when there is a pre-encoded signal, it is decoded once, then addition processing is performed, and it is encoded again and transmitted.

Embodiments below mainly describe a transmitter apparatus and a receiver apparatus which realize a video distribution system capable of presenting additional information to be added on a program video image in real time even when transmitting the program video image encoded by a pre-encoding scheme.

Note that, while the video distribution system according to the embodiments is a video distribution system by broadcasting (that is, a broadcasting system), it is not limited to such a video distribution system and may be a video distribution system by communication.

### [First Embodiment]

A video distribution system according to a first embodiment will be described. In description of drawings below, same or similar signs are attached to same or similar parts.

### (Video Distribution System)

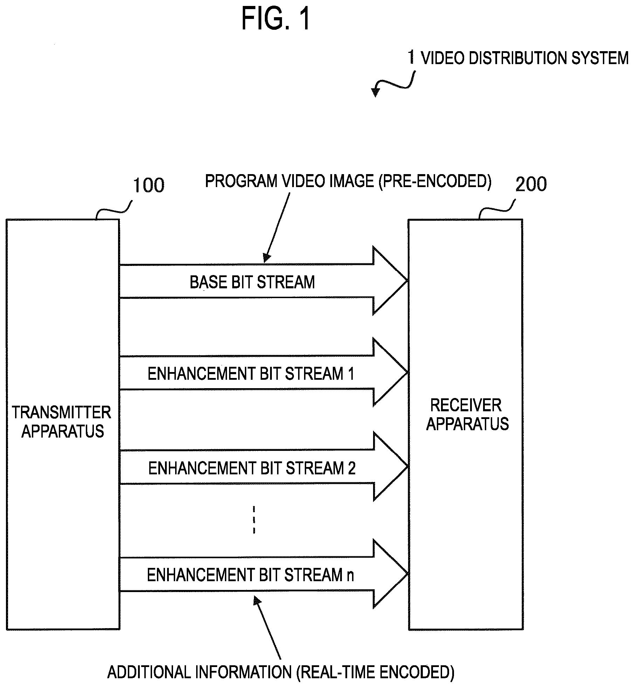

Fig. 1 is a diagram illustrating a video distribution system 1 according to the present embodiment.

The video distribution system 1 includes a transmitter apparatus 100 which encodes and transmits program video data, and a receiver apparatus 200 which receives and decodes encoded program video data. A program video image is an example of a main video image. In the present embodiment, the video distribution system 1 performs video transmission of broadcasting using scalable encoding. The scalable encoding is an example of multi-stream encoding.

In the scalable encoding, a base layer (hereinafter, a bit stream of the base layer is referred to as a "base bit stream") is a base stream, and the differential video image is transmitted as an enhancement layer (hereinafter, a bit stream of the enhancement layer is referred to as an "enhancement bit stream". In addition, when there are a plurality of enhancement bit streams, they are described as "enhancement bit streams 1, 2, 3... n"). The base bit stream is an example of a first stream, and the enhancement bit stream is an example of a second stream. However, the second stream may be a bit stream of an independent layer decodable by the enhancement bit stream alone.

While Fig. 1 illustrates an example of transmitting a plurality of enhancement bit streams (enhancement bit streams 1 to n), there may be only one enhancement bit stream to be transmitted. Note that a maximum number n of the enhancement bit streams is an integer equal to or larger than 2, and may be determined by an encoding scheme by a service. The receiver apparatus 200 is capable of, in addition to decoding the base bit stream alone, combining and decoding the base bit stream and the enhancement bit stream and also decoding the enhancement bit stream alone.

For a scalable encoding scheme, a Scalable Main 10 profile in HEVC can be used. The Scalable Main 10 profile is a mechanism of encoding capable of adding an enhancement layer and superimposing it on a video image of a base layer while transmitting video images corresponding to a Main 10 profile as a base bit stream. Alternatively, for a multilayer encoding scheme, a Multilayer Main 10 profile in VVC may be used. The Multilayer Main 10 profile is, similarly to the Scalable Main 10 profile described above, a profile which realizes transmission of a plurality of layers to the Main 10 profile, and is capable of video transmission of the plurality of layers. In an encoding technology provided with such a multilayer function (also referred to as a "multi-stream function"), a video image of the enhancement layer which is a high-order layer can be superimposed on the base layer to be a main video service of the video image. Note that, while examples of the multilayer encoding include the Scalable Main 10 profile of HEVC and the Multilayer Main 10 profile of the VVC, it is not limited to the HEVC and the VVC, and other encoding schemes (LCEVC or the like, for example) may be used.

In the present embodiment, the transmitter apparatus 100 preserves data for which the program video image is pre-encoded as the base bit stream, and transmits the preserved pre-encoded data as the base bit stream. For such pre-encoding, non-real-time encoding such as 2-pass encoding for example is used. The non-real-time encoding can secure processing time sufficient for optimizing encoding quality, and can realize encoding while performing optimization taking sufficient time in prior analysis. Therefore, by transmitting the pre-encoded data of the program image as the base bit stream, the program video image encoded with high encoding efficiency can be transmitted to the receiver apparatus 200, as compared with a case of encoding the program video image by real-time encoding.

The transmitter apparatus 100 transmits such a base bit stream, also generates real-time encoded data by encoding the additional information configuring a partial presentation area to be presented by being added on the program video image which is the main video image in real time, and transmits the real-time encoded data as the enhancement bit stream. The partial presentation area may be a slice, a tile, or a subpicture to be described later.

The additional information is information to be presented by being added on the program video image, refers to information for which immediacy is demanded for presentation, and is information that occupies only a part of a screen, and for example, a time signal, information called an emergency earthquake report and information called a news flash correspond to the additional information. The additional information may be a caption (for example, a telop and a sign language interpreter reporting a disaster, an incident or an accident). The caption is formed of characters including numerals, graphics, symbols or the combination thereof. However, the additional information is not limited to the emergency earthquake report and the news flash, and may be other information.

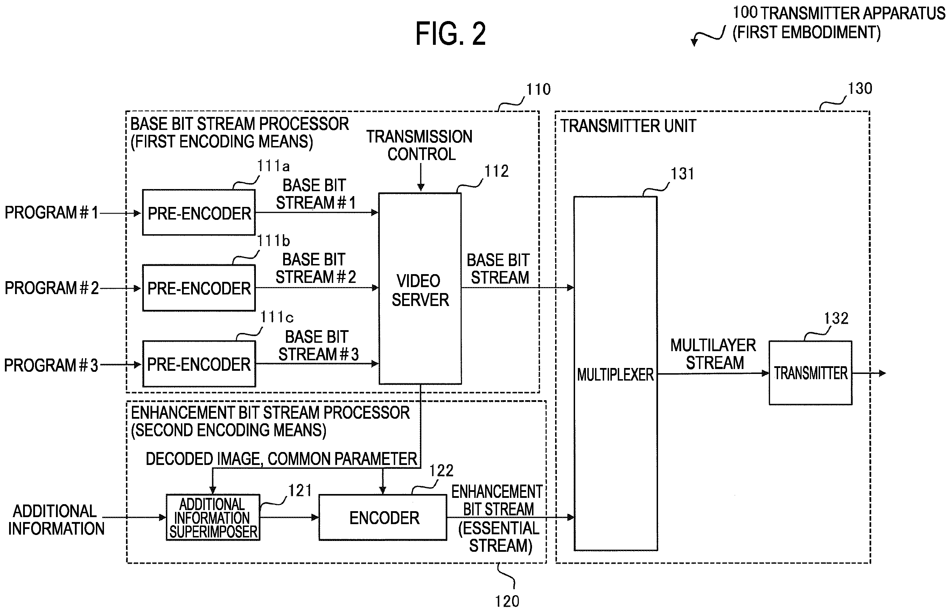

Here, the real-time encoding can perform encoding in a short time as compared with the non-real-time encoding (pre-encoding), even though the encoding efficiency is low as compared with the non-real-time encoding. Since it is a mechanism of encoding only differential information from a decoded video image of the base bit stream which is a feature of the scalable encoding, high-speed processing can be performed by simple encoding processing for the most part. Therefore, only the additional information part for which an area is limited can be efficiently encoded even as the real-time encoding, and by transmitting it as the enhancement bit stream, the additional information can be presented in real time together with the program video image on a side of the receiver apparatus 200. The transmitter apparatus 100 may impart a flag (addition transmit flag) indicating importance of the additional information, superimpose the flag indicating that it is important information such as an emergency earthquake report in a multiplexer (see Fig. 2), and transmit it.

In addition, by transmitting the additional information as the enhancement bit stream, the additional information can be decoded and presented when the receiver apparatus 200 includes a decoder corresponding to a scalable encoding technology, and an additional configuration (an additional decoder and position information for fitting synthesis or the like for example) for decoding the additional information is not needed. Further, when the additional information is not transmitted/selected, the receiver apparatus 200 can decode only the base bit stream, and presents the program video image. Further, when the flag indicating that it is an important signal such as an emergency earthquake report is received in the receiver apparatus 200, even while only the base bit stream is being viewed, control (including control that forces reception) that enables enhancement bit stream reception by the receiver apparatus 200 may be performed.

In such a manner, according to the present embodiment, the video distribution system capable of presenting the additional information to be added on the program video image in real time even in the case of transmitting the program video image encoded by the pre-encoding scheme (that is, the non-real-time encoding) can be realized. That is, the additional information can be presented in a short time after the additional information to be presented is generated.

In the present embodiment, the transmitter apparatus 100 may use the enhancement bit stream of a predetermined layer number as the enhancement bit stream which transmits the additional information, and may define it as an essential layer. Specifically, for an ID of the enhancement bit stream in which the additional information is encoded, an ID (that is, an additional layer ID) indicating that it is the additional information reserved by the system is used. Here, a layer ID of a highest order may be imparted as the ID. In the enhancement bit stream n which transmits the additional information, "n" is a fixed value of the layer assumed as a service, and "n" may be a maximum value of the layer for example. Therefore, on the side of the receiver apparatus 200, even while the service of the pre-encoded base bit stream is being viewed, the base bit stream and the enhancement bit stream n are received without being noticed, and since the enhancement bit stream n is not recognized when there is no additional information, real-time encoded addition can be realized only when there is the additional information. In addition, even while audio description using scalable like the base bit stream and the enhancement bit stream 1 (audio description) for example is being performed, when "n" is received at all times as a sufficiently high order layer, the base bit stream + the enhancement bit stream 1 + the enhancement bit stream n (additional information) are received without being noticed, the enhancement bit stream n is not viewed at all as a video image since the differential video image is not present when there is no addition, and the additional video image is decoded as the differential video image only when the additional video image is turned ON to present the addition to a viewer. Alternatively, when transmission is not performed as the essential layer, display is performed by a receiver apparatus operation (pressing of a button for tuning the addition for example) by a viewer.

### (Send-Out Device According to First Embodiment)

Fig. 2 is a diagram illustrating a configuration example of the transmitter apparatus 100 according to the present embodiment. As illustrated in Fig. 2, the transmitter apparatus 100 includes a base bit stream processor 110 (first encoding means) configured to output the base bit stream, an enhancement bit stream processor 120 (second encoding means) configured to output the enhancement bit stream, and a transmitter unit 130 configured to multiplex and transmit the base bit stream and the enhancement bit stream. Note that, while Fig. 2 illustrates an example in which there is only one enhancement bit stream, there may be a plurality of enhancement bit streams. In addition, all or a part of the base bit stream processor 110 and all or a part of the base bit stream processor 110 may be integrally configured.

The base bit stream processor 110 outputs the pre-encoded data of the program video image as the base bit stream. For example, the base bit stream processor 110 includes a plurality of pre-encoders 111 (pre-encoders 111a to 111c), and a video server 112. Note that the plurality of pre-encoders 111 and the video server 112 may be integrally configured.

Each pre-encoder 111 encodes the data of the corresponding program video image by the non-real-time encoding, and outputs the encoded data (pre-encoded data) to the video server 112 as the base bit stream. Fig. 2 illustrates an example in which the pre-encoder 111a encodes the video image of a program #1 and generates a base bit stream #1, the pre-encoder 111b encodes the video image of a program #2 and generates a base bit stream #2, and the pre-encoder 111c encodes the video image of a program #3 and generates a base bit stream #3. Note that while the example in which there are three pre-encoders 111 is illustrated, there may be only one or two pre-encoders 111 or there may be four or more.

The video server 112 preserves the base bit stream (pre-encoded data) output by each pre-encoder 111. The pre-encoder 111 is a device which realizes high-quality encoding by encoding control and parallel processing that are more advanced than that in a real-time encoder. The video server 112 transmits the base bit stream according to a program distribution schedule (program table). Specifically, the video server 112 outputs the base bit stream of a predetermined program to the transmitter unit 130 when time comes according to transmission control of transmitting the base bit stream of the predetermined program on time. In addition, the video server 112 outputs a video format of the base bit stream that is being transmitted and a parameter shared with the enhancement bit stream as encoding information to an encoder 122 of the enhancement bit stream processor 120. In the present embodiment, the video server 112 may further preserve local decoded data (that is, the data of the program video image) obtained by decoding the base bit stream (pre-encoded data). Such data of the program video image is utilized in encoding processing by the enhancement bit stream to be described later. Note that the video server 112 may include a decoder and output a decoded video image of the base bit stream to be transmitted to the enhancement bit stream processor 120.

The enhancement bit stream processor 120 acquires the additional information, encodes the program video image (local decoded video image) on which the additional information is superimposed in real time, generates real-time encoded data reflecting common encoded data of the video format or the like input from the video server 112, and outputs the real-time encoded data as the enhancement bit stream. Differently from the base bit stream processor 110 which waits until distribution time to output the preserved base bit stream (pre-encoded data), the enhancement bit stream processor 120 immediately encodes the data of the program video image on which the additional information is superimposed and outputs the bit stream. However, when the enhancement layer is program contents, it may be encoded similarly to the base layer and output. In the present embodiment, the enhancement bit stream processor 120 includes an additional information superimposer 121 and the encoder 122. Note that the additional information superimposer 121 and the encoder 122 may be integrally configured.

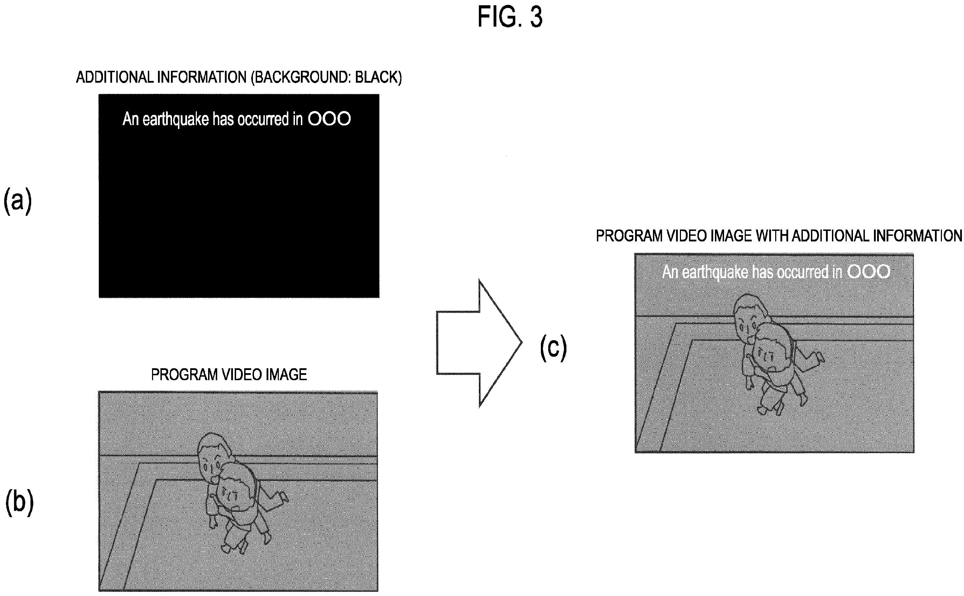

The additional information superimposer 121 acquires the data of the program video image which is currently being distributed from the video server 112, superimposes (synthesizes) the additional information on the acquired program video image, and outputs the data of the program video image on which the additional information is superimposed to the encoder 122. When the additional information is not input (when an input signal is video information indicating non-signal defined by the system), the additional information superimposer 121 may output the acquired program video image to the encoder 122 as it is. Fig. 3 is a diagram illustrating an operation example of the additional information superimposer 121 according to the present embodiment. In the example illustrated in Fig. 3(a), the additional information superimposer 121 superimposes caption information illustrated in Fig. 3(a) on the program video image illustrated in Fig. 3(b), and outputs the data of the program video image with the additional information, which is illustrated in Fig. 3(c). The additional information is a caption indicating an emergency earthquake report here, however, it may be a time signal or a drawing of a description video image, and a video image or the like without being limited to the caption.

The encoder 122 encodes the video data output by the additional information superimposer 121 in real time, generates the enhancement bit stream, and outputs it to the transmitter unit 130. Here, the encoder 122 may encode a whole presentation area (that is, an entire frame) of the program video image on which the additional information is superimposed by interlayer prediction which refers to the base layer (base bit stream). The interlayer prediction is prediction which refers to the base layer when encoding the enhancement bit stream. By the interlayer prediction, the differential video image with respect to the base bit stream can be transmitted as the enhancement bit stream. For example, when encoding the program video image with the additional information illustrated in Fig. 3(c) as the enhancement bit stream, since the base bit stream is the program video image illustrated in Fig. 3(b), a difference is the additional information illustrated in Fig. 3(a). By extremely increasing a priority degree of the interlayer prediction for a search of a prediction mode in the encoding processing of an area other than the area where a differential signal is present, prediction mode search time requiring processing time is shortened to a fraction to a several hundredth thereof, and the encoder 122 can efficiently and promptly encode the additional information by the interlayer prediction and generate the encoded data (enhancement bit stream). Here, the encoder 122 limits the area where a difference from the base bit stream is zero to the interlayer prediction. In addition, when an addition area is set, since it is clear that the difference in the area other than the addition area is 0, it is not necessary to generate an encoded signal of the area other than the addition area. Note that, when the additional information is not input, the encoder 122 may omit prediction processing and directly generate the encoded data (real-time encoded data) indicating that there is no difference. By the limitation, the real-time encoding of the enhancement bit stream can be processed at a high speed.

The transmitter unit 130 synthesizes the base bit stream output by the video server 112 of the base bit stream processor 110 and the enhancement bit stream output by the encoder 122 of the enhancement bit stream processor 120, multiplexes them with other media, and transmits them out. For example, the transmitter unit 130 includes a multiplexer 131 and a transmitter 132. Whether the base bit stream and the enhancement bit stream are synthesized and transmitted via a same path by a broadcasting radio wave or a communication path for example or they are individually transmitted by different paths using the broadcasting radio wave and the communication path together depends on an encoding scheme and a transmission scheme.

The multiplexer 131 multiplexes the individual streams using a predetermined multiplexing scheme, and outputs a multilayer stream to the transmitter 132. The predetermined multiplexing scheme may be Transport stream (TS) of MPEG-2 or MPEG-4, or may be MPEG Media Transport (MMT). The predetermined multiplexing scheme is not limited thereto, and may be a multiplexing scheme capable of synchronously transmitting the plurality of streams such as CMAF (Common Media Application Format) for example. In addition, the multiplexer 131 imparts an ID for service identification to each of the base bit stream and the enhancement bit stream.

In the present embodiment, the multiplexer 131 transmits the enhancement bit stream which transmits the additional information as an essential stream for which it is essential to be decoded on a receiving side. Thus, it is ensured that the additional information is to be presented on the receiving side. Reception/decoding of the enhancement bit stream are not essential in general scalable encoding, however, in the present embodiment, since significant information demanding immediacy is transmitted as the additional information, the enhancement bit stream which transmits the additional information may be transmitted as the stream for which the reception/decoding are essential.

For example, the multiplexer 131 may impart a flag indicating that the enhancement bit stream is the essential stream and transmit it, or may impart a predetermined stream number (predetermined stream ID) defined as a stream number of the essential stream to the enhancement bit stream which transmits the additional information and transmit it. In addition, the addition transmit flag may be added at addition timing without defining the essential layer, the flag may be detected on a receiver apparatus side, and reception of the enhancement bit stream may be automatically started according to presence/absence of the addition transmit flag. As described above, when the layer ID of the enhancement bit stream n which transmits the additional information is defined by system specifications, the multiplexer 131 may impart an essential layer ID to the enhancement bit stream which transmits the additional information and transmit it. Here, "n" is the fixed value of the layer assumed as the service, and for example, "n" may be defined as the maximum value of the layer determined in the system or the like, and transmission of the essential layer ID may be omitted. By defining "n" as the maximum value of the layer determined in the system, a different enhancement bit stream (a different service, for example) can be transmitted as a layer of an order lower than the enhancement bit stream which transmits the additional information.

The transmitter 132 transmits the multilayer stream output by the multiplexer 131 via a transmission path. For the transmission path, for example, the base bit stream and the enhancement bit stream may be transmitted via the same path using the broadcasting radio wave or a network, or may be transmitted via the different paths like transmitting some streams (the base bit stream for example) by the broadcasting wave and transmitting the remaining streams (the enhancement bit stream for example) by the network.

### (Reception Device According to First Embodiment)

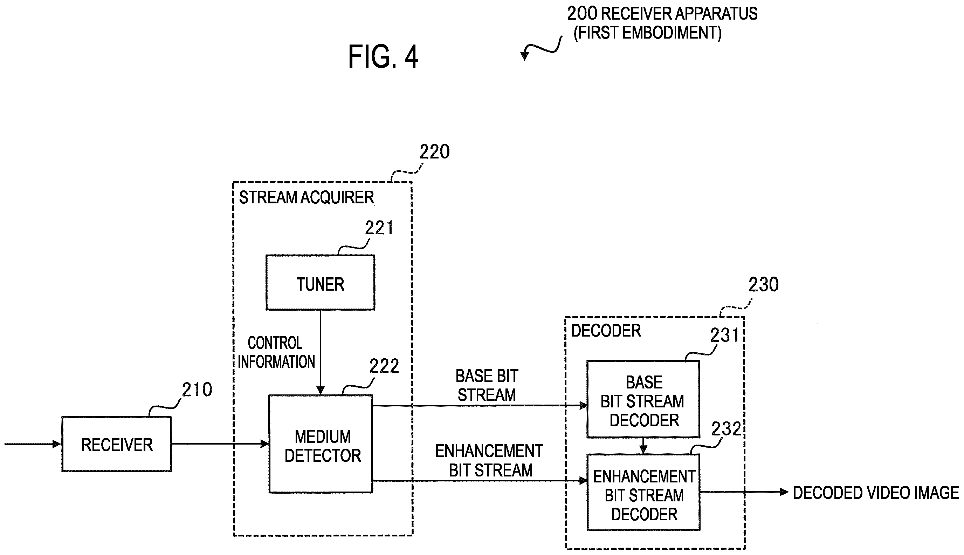

Fig. 4 is a diagram illustrating a configuration example of the receiver apparatus 200 according to the present embodiment. The receiver apparatus 200 includes a receiver 210, a stream acquirer 220, and a decoder 230.

The receiver 210 receives transmission signals including the base bit stream and the corresponding enhancement bit stream, and outputs the received signals to the stream acquirer 220.

The stream acquirer 220 acquires the respective streams that are the base bit stream and the corresponding enhancement bit stream from the received signals, and outputs the base bit stream and the enhancement bit stream to the decoder 230. In the present embodiment, the base bit stream is main video contents of the program video image. The enhancement bit stream is the real-time encoded data generated by encoding the data of the program video image on which the additional information is superimposed in real time. The stream acquirer 220 may detect the essential layer ID or the addition transmission flag, and acquire the enhancement bit stream which transmits the additional information as the essential stream for which it is essential to be decoded on the receiving side. The enhancement bit stream which transmits the additional information may be imparted with a predetermined stream number (predetermined stream ID) defined as the stream number of the essential stream. In addition, in the case of the stream other than the essential layer, the corresponding enhancement bit stream may be acquired by a user explicitly selecting it by means such as a remote controller. Note that, when there is no enhancement bit stream, the decoded video image of a base bit stream decoder 231 may pass through an enhancement bit stream decoder 232 and be output.

For example, the stream acquirer 220 includes a tuner 221 and a medium detector 222. The tuner 221 selects (tunes) a service stream to be reproduced based on an operation from a viewer for example, and outputs an ID indicating a selection result to the medium detector 222 as control information.

The medium detector 222 acquires (extracts) a corresponding stream from multiplex signals based on the ID indicated by the control information output by the tuner 221, and outputs the base bit stream and the corresponding enhancement bit stream to the decoder 230. Here, when the enhancement bit stream which transmits the additional information is defined as the essential stream, the medium detector 222 acquires the enhancement bit stream and outputs it to the decoder 230 even when the viewer does not explicitly select the enhancement bit stream. Note that the medium detector 222 may function as detection means which detects the flag multiplexed and transmitted on a transmission side, the flag indicating that the additional information is transmitted by the enhancement bit stream. The medium detector 222 may automatically acquire the essential stream of the enhancement bit stream in response to detection of the flag. Alternatively, the medium detector 222 may function as detection means which detects the essential layer ID. The medium detector 222 may automatically acquire the corresponding enhancement bit stream in response to detection of the essential layer ID. Further, when it is not the essential layer, On/Off of the addition may be switched by acquiring the corresponding enhancement bit stream by a user explicitly selecting it by the means such as a remote controller.

The decoder 230 combines and decodes the base bit stream or the enhancement bit stream, and outputs (presents) the decoded video image. For example, the decoder 230 includes the base bit stream decoder 231 and the enhancement bit stream decoder 232. The base bit stream decoder 231 decodes the data of the program video image from the base bit stream. The enhancement bit stream decoder 232 decodes the data of the program video image on which the additional information is superimposed from the enhancement bit stream. Here, the enhancement bit stream decoder 232 decodes the whole presentation area (entire frame) of the program video image on which the additional information is superimposed by the interlayer prediction which refers to the base bit stream according to the information of the stream. Since the enhancement bit stream is a stream for which the additional information is encoded as the differential video image with respect to the base bit stream, the enhancement bit stream decoder 232 refers to the program video image decoded by the base bit stream decoder 231, superimposes (synthesizes) the additional information as the difference on the program video image, and decodes the program video image with the additional information. Thus, the additional information can be presented by efficiently and promptly decoding the additional information by the interlayer prediction.

Note that, in the embodiment described above, the base bit stream and the enhancement bit stream are divided and illustrated for convenience, however, the streams may be synthesized as one stream according to the specifications of the encoding scheme. Alternatively, for example, in the case of transmitting the base bit stream and the enhancement bit stream using the different paths or the like, the base bit stream and the enhancement bit stream may be divided to perform processing by a packet unit of multiplexing (transmitting) the base bit stream and the enhancement bit stream.

### [Second Embodiment]

For a video distribution system according to a second embodiment, differences from the first embodiment described above will be mainly described. In the following description of the second embodiment, some of the description that overlaps with the first embodiment is omitted, however, matters described in the first embodiment are applicable also to the second embodiment unless it is clearly indicated that it is not so according to a context.

### (Send-Out Device According to Second Embodiment)

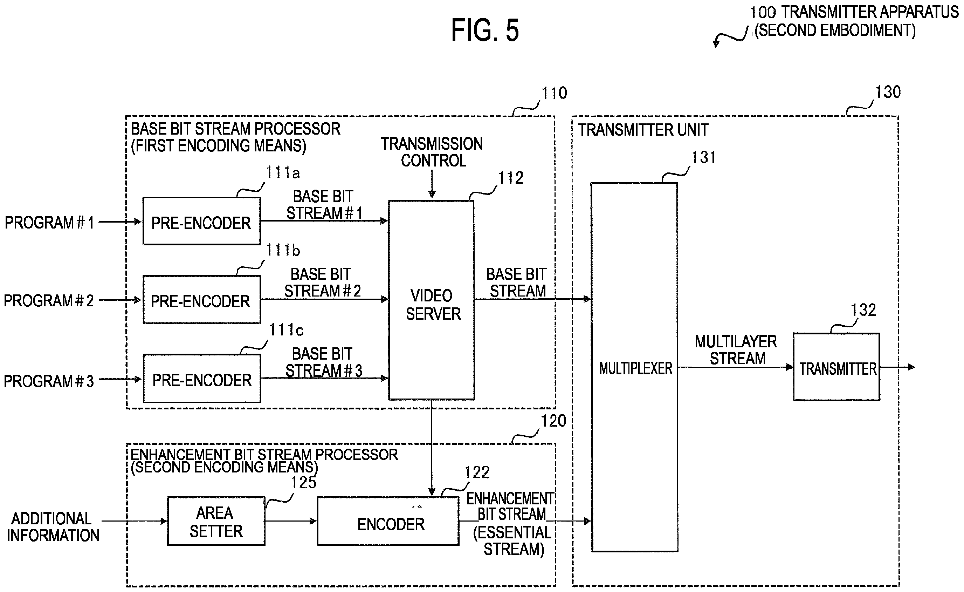

Fig. 5 is a diagram illustrating a configuration example of the transmitter apparatus 100 according to the present embodiment. As illustrated in Fig. 5, the transmitter apparatus 100 includes the base bit stream processor 110 (first encoding means) configured to output the base bit stream, the enhancement bit stream processor 120 (second encoding means) configured to output the enhancement bit stream, and the transmitter unit 130 configured to multiplex and transmit the base bit stream and the enhancement bit stream. Note that, while Fig. 5 illustrates an example in which there is only one enhancement bit stream, there may be a plurality of enhancement bit streams.

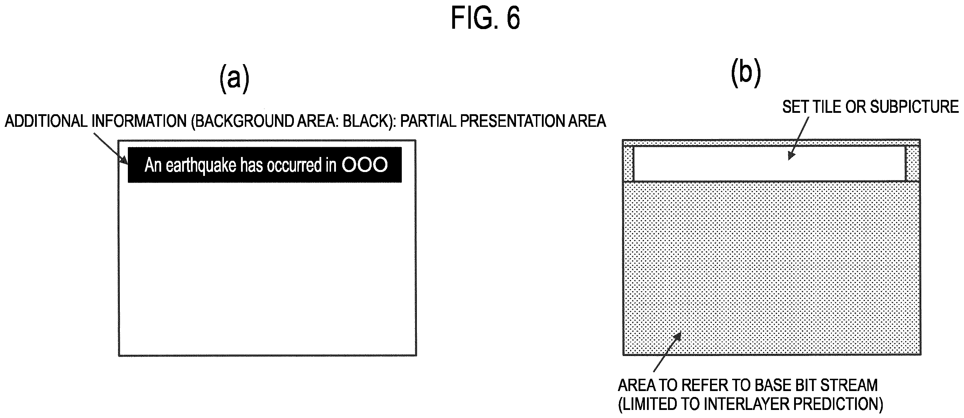

The base bit stream processor 110 outputs the pre-encoded data of the program video image as the base bit stream. For example, the base bit stream processor 110 includes the one or more pre-encoders 111 (pre-encoders 111a to 11 1c) for the base bit stream, and the video server 112. The base bit stream processor 110 may include an area setter (see Fig. 6(b)). Note that, while all the encoders are illustrated as the pre-encoders in Fig. 5, since the video server 112 is a server which has a transmit function, a real-time encoder may be mixed.

Each pre-encoder 111 encodes the data of the corresponding program video image by the non-real-time encoding, and outputs the encoded data (pre-encoded data) to the video server 112 as the base bit stream. Fig. 5 illustrates an example in which the pre-encoder 111a encodes the video image of the program #1 and generates the base bit stream #1, the pre-encoder 111b encodes the video image of the program #2 and generates the base bit stream #2, and the pre-encoder 111c encodes the video image of the program #3 and generates the base bit stream #3. Note that while the example in which there are three pre-encoders 111 is illustrated, there may be only one pre-encoder 111 or there may be four or more. Further, the real-time encoder may be mixed.

The video server 112 preserves the base bit stream (pre-encoded data) output by each pre-encoder 111. The pre-encoder 111 is a device which realizes high-quality encoding by the encoding control and the parallel processing that are more advanced than that in a real-time encoder. The video server 112 transmits the base bit stream according to a program broadcasting schedule (program table). Specifically, the video server 112 outputs the base bit stream of a predetermined program to the transmitter unit 130 when the time comes according to the transmission control of transmitting the base bit stream of the predetermined program on time. When an input signal of the video server is the real-time encoder, the input signal is directly transmitted according to the program table without being stored or preserved. In addition, the video format of the base bit stream that is being transmitted and the parameter shared with the enhancement bit stream as the encoding information are output to the encoder 122 of the enhancement bit stream processor 120.

The enhancement bit stream processor 120 acquires the additional information, encodes the partial presentation area including the additional information to be presented by being added on the program video image in real time as the enhancement layer independent of the base bit stream, generates real-time encoded data reflecting the common encoded data for which the video format input from the video server 112 is input, and outputs the real-time encoded data as the enhancement bit stream corresponding to the base bit stream that is being transmitted. Differently from the base bit stream processor 110 which waits until broadcasting time to output the preserved base bit stream (pre-encoded data), the enhancement bit stream processor 120 immediately encodes the input video image and outputs the bit stream. However, when the enhancement layer is the program contents, it may be encoded beforehand and output similarly to the base layer. In the present embodiment, the enhancement bit stream processor 120 includes an area setter 125 and the encoder 122.

The area setter 125 sets an encoding area which matches (coincides) with the partial presentation area including the additional information to be presented by being added on the program video image. The area setter 125 controls the encoder 122 so as to set the encoding area as a tile or a subpicture for example for such an encoding area. When the additional information is not input (when the input signal is solid black or the like and does not include contents as the video information), the area setter 125 may not set the encoding area. Note that the area setter 125 may detect that the additional information is input in response to addition button ON control, or may detect that in response to a change of the input signal by video processing.

Fig. 6 is a diagram illustrating an operation example of the area setter 125 according to the present embodiment. In the example illustrated in Fig. 6(a), the additional information is a caption indicating an emergency earthquake report. A black rectangular area is set around the additional information, and the rectangular area configures the partial presentation area. As illustrated in Fig. 6(b), the area setter 125 sets a tile or a subpicture that coincides with a boundary of such a partial presentation area, and controls the encoder 122 so as to limit the encoding area so that a CTU (Coding Tree Unit) boundary and the boundary coincide with each other. Further, as illustrated in Fig. 6(b), the area setter 125 sets an area (area illustrated by hatching in Fig. 6(b)) other than the partial presentation area as an area to refer to the base bit stream, and limits the area to the interlayer prediction.

Returning to Fig. 5, the encoder 122 encodes the partial presentation area including the additional information independently of the base bit stream. The encoder 122 may encode the partial presentation area by performing at least one of intra prediction (intra-frame prediction) which does not refer to the base bit stream as an independent layer and inter prediction which does not perform interlayer reference within the partial presentation area. Thus, the partial presentation area can be efficiently encoded.

In addition, the encoder 122 encodes the presentation area (area illustrated by hatching in Fig. 6(b)) other than the partial presentation area as the area to refer to the base bit stream. For example, the encoder 122 encodes the presentation area other than the partial presentation area by the interlayer prediction which refers to the base bit stream. The interlayer prediction is the prediction which refers to the base bit stream when encoding the enhancement bit stream, and by the interlayer prediction, the differential video image with respect to the base bit stream can be transmitted as the enhancement bit stream. Here, since the presentation area (area illustrated by hatching in Fig. 6(b)) other than the partial presentation area is an area where no signal is present, the area is encoded as an area to utilize (apply) the base bit stream as it is.

The encoder 122 generates the real-time encoded data by the encoding described above, and outputs the real-time encoded data to the transmitter unit 130 as the enhancement bit stream.

The transmitter unit 130 multiplexes and transmits the base bit stream output by the video server 112 of the base bit stream processor 110 and the enhancement bit stream output by the encoder 122 of the enhancement bit stream processor 120. For example, the transmitter unit 130 includes the multiplexer 131 and the transmitter 132. Whether the streams that are the base bit stream and the enhancement bit stream are synthesized or individually transmitted depends on the encoding scheme and the transmission scheme.

The multiplexer 131 multiplexes the individual streams using a predetermined multiplexing scheme, and outputs the multilayer stream to the transmitter 132. The predetermined multiplexing scheme may be Transport stream (TS) of MPEG-2 or MPEG-4, or may be MPEG Media Transport (MMT). The predetermined multiplexing scheme is not limited thereto, and may be a multiplexing scheme capable of synchronously transmitting the plurality of streams such as CMAF (Common Media Application Format) for example. In addition, the multiplexer 131 imparts an ID for service identification to each of the base bit stream and the enhancement bit stream.

In the present embodiment, the multiplexer 131 transmits the enhancement bit stream which transmits the additional information as an essential stream for which it is essential to be decoded on the receiving side. Thus, it is ensured that the additional information is to be presented on the receiving side. The reception/decoding of the enhancement bit stream are not essential in general scalable encoding, however, in the present embodiment, since significant information demanding immediacy is transmitted as the additional information, the enhancement bit stream which transmits the additional information may be transmitted as the stream for which the reception/decoding are essential.

For example, the multiplexer 131 may impart a flag indicating that the enhancement bit stream is the essential stream and transmit it, or may impart a predetermined stream number (predetermined stream ID) defined as a stream number of the essential stream to the enhancement bit stream which transmits the additional information and transmit it. In addition, the addition transmit flag may be added at the addition timing without defining the essential layer, the flag may be detected on the receiver apparatus side, and the reception of the enhancement bit stream may be automatically started according to the presence/absence of the addition transmit flag. As described above, when the layer ID of the enhancement bit stream n which transmits the additional information is defined by the system specifications, the multiplexer 131 may impart an essential layer ID to the enhancement bit stream which transmits the additional information and transmit it without the flag. Here, "n" is the fixed value of the layer assumed as the service, and for example, "n" may be defined as the maximum value of the layer or the like, and transmit of the essential layer ID may be omitted. By defining "n" as the maximum value of the layer, a different enhancement bit stream (a different service, for example) can be transmitted as a layer of an order lower than the enhancement bit stream which transmits the additional information. For the layer other than such an essential layer, the On/Off of the addition may be switched by being switched by a user by remote controller switching.

The transmitter 132 transmits the multilayer stream output by the multiplexer 131 via a transmission path. For the transmission path, for example, the base bit stream and the enhancement bit stream may be transmitted via the same path using the broadcasting radio wave or a network, or may be transmitted via the different paths like transmitting some streams (the base bit stream for example) by the broadcasting wave and transmitting the remaining streams (the enhancement bit stream for example) by the network.

### (Reception Device According to Second Embodiment)

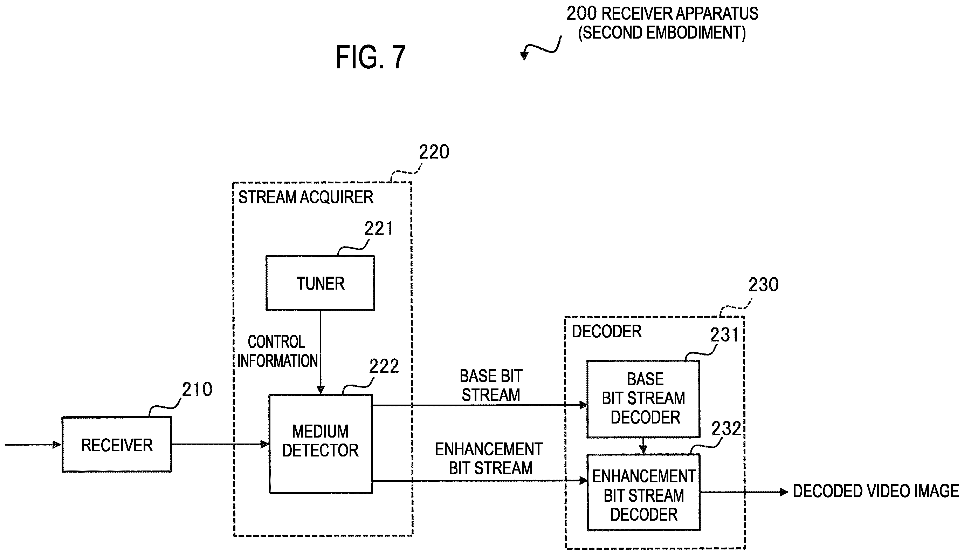

Fig. 7 is a diagram illustrating a configuration example of the receiver apparatus 200 according to the present embodiment. As illustrated in Fig. 7, the receiver apparatus 200 includes the receiver 210, the stream acquirer 220, and the decoder 230.

The receiver 210 receives transmission signals including the base bit stream and the corresponding enhancement bit stream, and outputs the received signals to the stream acquirer 220.

The stream acquirer 220 acquires the respective streams that are the base bit stream and the enhancement bit stream from the received signals, and outputs the base bit stream and the enhancement bit stream to the decoder 230. In the present embodiment, the base bit stream is the pre-encoded data of the program video image. The enhancement bit stream is the encoded data generated by encoding the partial presentation area including the additional information to be presented by being added on the program video image. The enhancement bit stream may be the encoded data generated by encoding the partial presentation area independently of the base layer.

When the essential layer ID or the addition transmit flag is detected, the stream acquirer 220 acquires the enhancement bit stream which transmits the additional information as the essential stream for which it is essential to be decoded on the receiving side. The enhancement bit stream which transmits the additional information may be imparted with a predetermined stream number (predetermined stream ID) defined as the stream number of the essential stream.

For example, the stream acquirer 220 includes the tuner 221 and the medium detector 222. The tuner 221 selects (tunes) a service stream to be reproduced based on an operation from a viewer for example, and outputs an ID indicating a selection result to the medium detector 222 as control information.

The medium detector 222 acquires (extracts) a corresponding stream from multiplex signals based on the ID indicated by the control information output by the tuner 221, and outputs the base bit stream and the corresponding enhancement bit stream to the decoder 230. Here, when the enhancement bit stream which transmits the additional information is defined as the essential stream, the medium detector 222 acquires the enhancement bit stream and outputs it to decoding means 230 even when the viewer does not explicitly select the enhancement bit stream. Note that the medium detector 222 may function as detection means which detects the flag multiplexed and transmitted on the transmission side, the flag indicating that the additional information is transmitted by the enhancement bit stream. The medium detector 222 may acquire the enhancement bit stream in response to the detection of the flag. Alternatively, the medium detector 222 may function as detection means which detects the essential layer ID. The medium detector 222 may acquire the corresponding enhancement bit stream in response to the detection of the essential layer ID.

The decoder 230 combines and decodes the base bit stream and the enhancement bit stream, and outputs (presents) the decoded video image. For example, the decoder 230 includes the base bit stream decoder 231 and the enhancement bit stream decoder 232. The base bit stream decoder 231 decodes the data of the program video image from the base bit stream. The enhancement bit stream decoder 232 decodes the video image including the additional information from the enhancement bit stream. Here, the enhancement bit stream decoder 232 may decode the partial presentation area by performing at least one of the intra prediction and the interlayer non-reference inter prediction within the partial presentation area including the additional information. Further, the enhancement bit stream decoder 232 decodes the presentation area other than the partial presentation area as the area to refer to the base bit stream. Alternatively, only the partial presentation area may be decoded.

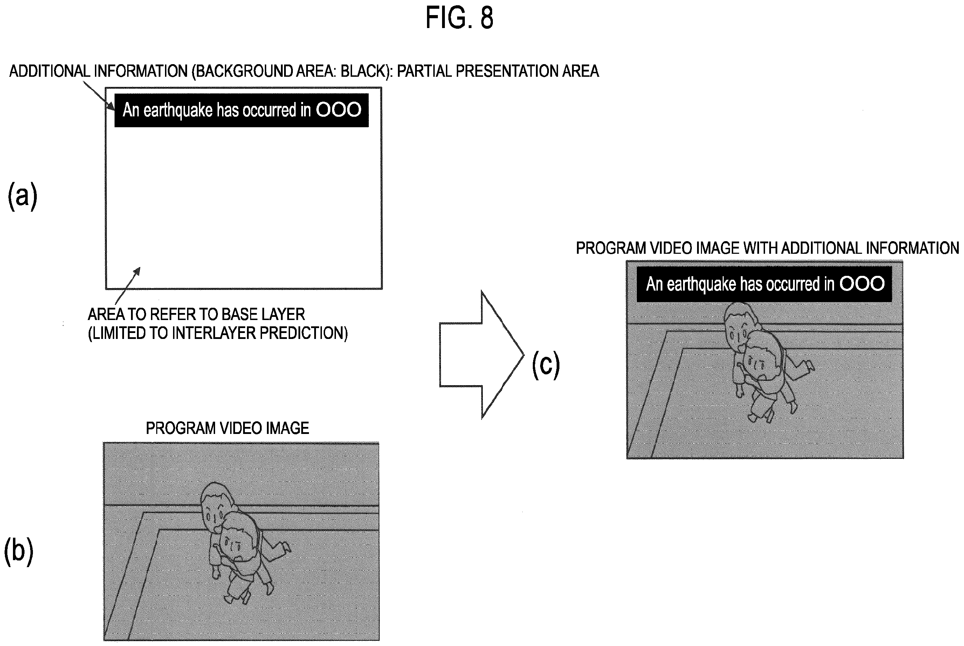

Fig. 8 is a diagram illustrating an operation example of the decoder 230 according to the present embodiment. The enhancement bit stream decoder 232 decodes the area other than the partial presentation area (for example, a slice, a tile, or a subpicture) illustrated in Fig. 8(a) by referring to the program video image (that is, the base bit stream) illustrated in Fig. 8(b). As a result, the enhancement bit stream decoder 232 decodes the partial presentation area (for example, a slice, a tile, or a subpicture) independently of the base bit stream, copies the program video image (that is, the decoded video image of the base bit stream) for the area other than the partial presentation area, or performs skip processing, and thus decodes the program video image with the additional information illustrated in Fig. 8(c). Accordingly, the additional information can be efficiently and promptly presented.

Note that, the enhancement bit stream decoder 232 can decode the partial presentation area without referring to the base layer since the partial presentation area (additional information) is decoded using the intra prediction or the interlayer non-reference inter prediction from the enhancement bit stream. Then, the decoder 230 can divert the program video image of the decoded base layer for the area other than the partial presentation area and output the program video image with the additional information. When the program video image with the additional information is essential display, or when it is selected by a viewer (user), the decoder 230 may decode only the enhancement layer without decoding the base layer for the partial presentation area. Further, when it is not selected, only the base layer may be decoded.

In the embodiment described above, the base bit stream and the enhancement bit stream are divided and illustrated for convenience, however, the streams may be synthesized as one elementary stream similarly to the specifications of the general encoding scheme. In the case of such a stream, for example, the base bit stream and the enhancement bit stream may be divided into the base bit stream and the enhancement bit stream to perform processing by the packet unit.

### [Other Embodiments]

In the first and second embodiments described above, an example in which the additional information is a caption has been described, however, the additional information may be the information that occupies only a part of a screen, and is not limited to the caption.

In addition, in the first and second embodiments described above, the enhancement bit stream can be generated at a high speed in the encoding processing so that the base bit stream may be a bit stream generated by the real-time encoder of all or a part of the pre-encoders 111 without being limited to the pre-encoded stream, and utilization may be performed as the video distribution system which generates the additional information (enhancement bit stream) at a high speed.

A program which makes a computer execute each processing performed by the transmitter apparatus 100 may be provided. Similarly, a program which makes a computer execute each processing performed by the receiver apparatus 200 may be provided. The program may be recorded in a computer readable medium. When the computer readable medium is used, the program can be installed to a computer. Here, the computer readable medium in which the program is recorded may be a non-transitory recording medium. The non-transitory recording medium is not limited in particular, and may be a recording medium such as a CD-ROM and a DVD-ROM, for example.

Circuits which execute each processing performed by the transmitter apparatus 100 may be integrated to configure the transmitter apparatus 100 by a semiconductor integrated circuit (chip set, SoC). Similarly, circuits which execute each processing performed by the receiver apparatus 200 may be integrated to configure the receiver apparatus 200 by a semiconductor integrated circuit (chip set, SoC).

Expressions "based on" and "depending on/in response to" used in the present disclosure do not mean "based only on" or "depending only on/in response to only" unless otherwise noted. The expression "based on" means both "based only on" and "based at least partially on". Similarly, the expression "depending on/in response to" means both "depending only on/in response to only" and "at least partially depending on/in response to". Terms "include", "comprise" and variants thereof do not mean that only listed items are included, and mean that only the listed items may be included and further items may be included in addition to the listed items. In addition, the term "or" used in the present disclosure is intended not to be exclusive disjunction. In the present disclosure, for example, when articles such as "a", "an", and "the" in English are added by translation, the articles include plurality unless it is clearly indicated that it is not so according to the context.

The embodiments have been described above in detail with reference to the drawings, however, specific configurations are not limited to the ones described above, and various design changes or the like are possible without departing from the spirit of the invention.

The present application claims priority to Japanese Patent Application No. 2021-197475 (filed on December 6, 2021) and Japanese Patent Application No. 2021-197478 (filed on December 6, 2021), the entire contents thereof are incorporated in the description of the present application.

### [Supplements]

Features regarding the embodiments described above will be supplemented.

### (Supplement 1)

A transmitter apparatus (100) used in a video distribution system (1), the transmitter apparatus (100) including:
first encoding means (110) configured to output a first stream in multi-stream encoding;
second encoding means (120) configured to output a second stream in the multi-stream encoding; and
multiplexing means (131) configured to multiplex and output the first stream and the second stream,
wherein the first encoding means (110) outputs encoded data obtained by encoding a main video image as the first stream, and
the second encoding means (120) outputs encoded data obtained by encoding a partial presentation area to be presented by being added to the main video image as the second stream.

### (Supplement 2)

The transmitter apparatus (100) according to supplement 1, wherein
the first encoding means (110) outputs a stream of a base layer in the multi-stream encoding,
the second encoding means (120) outputs a stream of an enhancement layer in the multi-stream encoding, and
the multiplexing means (131) multiplexes and transmits the stream of the base layer and the stream of the enhancement layer.

### (Supplement 3)

The transmitter apparatus (100) according to supplement 2, wherein
the first encoding means (110) outputs encoded data of a preserved program video image as the first stream, and
the second encoding means (120) generates encoded data by encoding data of the program video image on which additional information configuring the partial presentation area is superimposed, and outputs the encoded data as the second stream.

### (Supplement 4)

The transmitter apparatus (100) according to supplement 3, wherein
the second encoding means (120) encodes an entire presentation area of the program video image on which the additional information is superimposed by interlayer prediction which refers to the base layer.

### (Supplement 5)

The transmitter apparatus (100) according to supplement 1, wherein
the first encoding means (110) outputs encoded data of a preserved program video image as the first stream, and
the second encoding means (120) generates encoded data by encoding a partial presentation area including additional information to be presented by being added on the program video image independently of a base layer, and outputs the encoded data as the second stream.

### (Supplement 6)

The transmitter apparatus (100) according to supplement 5, wherein
the second encoding means (120) encodes the partial presentation area by performing at least one of intra prediction and interlayer non-reference inter prediction within the partial presentation area.

### (Supplement 7)

The transmitter apparatus (100) according to supplement 5 or 6, wherein
the second encoding means (120) encodes a presentation area other than the partial presentation area as an area to refer to the base layer.

### (Supplement 8)

The transmitter apparatus (100) according to any one of supplements 1 to 7, wherein
the multiplexing means (131) transmits the second stream which transmits the additional information as an essential stream for which it is essential to be decoded on a receiving side.

### (Supplement 9)

The transmitter apparatus (100) according to supplement 8, wherein
the multiplexing means (131) imparts a predetermined stream number defined as a stream number of the essential stream to the second stream which transmits the additional information.

### (Supplement 10)

The transmitter apparatus (100) according to any one of supplements 1 to 9, wherein
the multiplexing means (131) adds and transmits a flag indicating that the additional information is transmitted by the second stream when multiplexing the additional information.

### (Supplement 11)

A receiver apparatus (200) used in a video distribution system (1), the receiver apparatus (200) including:
acquisition means (220) configured to acquire a first stream and a second stream in multi-stream encoding; and
decoding means (230) configured to decode each of the first stream and the second stream,
wherein the first stream is data obtained by encoding a main video image, and
the second stream is encoded data obtained by encoding a partial presentation area to be presented by being added on the main video image.

### (Supplement 12)

The receiver apparatus (200) according to supplement 11, wherein
the first stream is a stream of a base layer in the multi-stream encoding,
the second stream is a stream of an enhancement layer in the multi-stream encoding, and
the decoding means (230) combines and decodes the first stream and the second stream.

### (Supplement 13)

The receiver apparatus (200) according to supplement 11, wherein
the first stream is encoded data of a program video image, and
the second stream is encoded data obtained by encoding the data of the program video image on which additional information is superimposed.

### (Supplement 14)

The receiver apparatus (200) according to supplement 13, wherein
the decoding means (230) decodes an entire presentation area of the program video image on which the additional information is superimposed by interlayer prediction which refers to a base layer.

### (Supplement 15)

The receiver apparatus (200) according to supplement 12, wherein
the first stream is encoded data of a program video image, and
the second stream is encoded data obtained by encoding a partial presentation area including additional information to be presented by being added on the program video image independently of a base layer.

### (Supplement 16)

The receiver apparatus according to supplement 15, wherein
the decoding means
decodes the program video image from the first stream,
decodes the partial presentation area from the second stream, and
outputs a program video image with additional information using the program video image and the partial presentation area.

### (Supplement 17)

The receiver apparatus (200) according to supplement 15 or 16, wherein
the decoding means (230) decodes the partial presentation area by performing at least one of intra prediction and interlayer non-reference inter prediction within the partial presentation area.

### (Supplement 18)

The receiver apparatus (200) according to any one of supplements 15 to 17, wherein
the decoding means (230) decodes a presentation area other than the partial presentation area as an area to refer to the base layer.

### (Supplement 19)

The receiver apparatus (200) according to any one of supplements 11 to 18, wherein
the acquisition means (220) switches whether or not to acquire the second stream in response to an operation of a viewer.

### (Supplement 20)

The receiver apparatus (200) according to any one of supplements 11 to 19, wherein
the acquisition means (220) acquires the second stream which transmits the additional information as an essential stream for which it is essential to be decoded on a receiving side.

### (Supplement 21)

The receiver apparatus (200) according to supplement 20, wherein
the second stream which transmits the additional information is imparted with a predetermined stream number defined as a stream number of the essential stream.

### (Supplement 22)

The receiver apparatus (200) according to any one of supplements 11 to 21, further including
detection means configured to detect a flag multiplexed and transmitted on a transmission side, the flag indicating that the additional information is transmitted by the second stream,
wherein the acquisition means (220) acquires the second stream in response to detection of the flag.

## Claims

1. A transmitter apparatus used in a video distribution system, the transmitter apparatus comprising:
first encoding means configured to output a first stream in multi-stream encoding;
second encoding means configured to output a second stream in the multi-stream encoding; and
multiplexing means configured to multiplex and output the first stream and the second stream,
wherein the first encoding means outputs encoded data obtained by encoding a main video image as the first stream, and
the second encoding means outputs encoded data obtained by encoding a partial presentation area to be presented by being added to the main video image as the second stream.

2. The transmitter apparatus according to claim 1, wherein
the first encoding means outputs a stream of a base layer in the multi-stream encoding,
the second encoding means outputs a stream of an enhancement layer in the multi-stream encoding, and
the multiplexing means multiplexes and transmits the stream of the base layer and the stream of the enhancement layer.

3. The transmitter apparatus according to claim 1, wherein
the first encoding means outputs encoded data of a preserved program video image as the first stream, and
the second encoding means generates encoded data by encoding data of the program video image on which additional information configuring the partial presentation area is superimposed, and outputs the encoded data as the second stream.

4. The transmitter apparatus according to claim 3, wherein
the second encoding means encodes an entire presentation area of the program video image on which the additional information is superimposed by interlayer prediction which refers to a base layer.

5. The transmitter apparatus according to claim 1, wherein
the first encoding means outputs encoded data of a preserved program video image as the first stream, and
the second encoding means generates encoded data by encoding a partial presentation area including additional information to be presented by being added on the program video image independently of a base layer, and outputs the encoded data as the second stream.

6. The transmitter apparatus according to claim 5, wherein
the second encoding means encodes the partial presentation area by performing at least one of intra prediction and interlayer non-reference inter prediction within the partial presentation area.

7. . The transmitter apparatus according to claim 5, wherein
the second encoding means encodes a presentation area other than the partial presentation area as an area to refer to the base layer.

8. . The transmitter apparatus according to any one of claims 1 to 7, wherein
the multiplexing means transmits the second stream which transmits the additional information as an essential stream for which it is essential to be decoded on a receiving side.

9. . The transmitter apparatus according to claim 8, wherein
the multiplexing means imparts a predetermined stream number defined as a stream number of the essential stream to the second stream which transmits the additional information.

10. . The transmitter apparatus according to any one of claims 1 to 7, wherein
the multiplexing means adds and transmits a flag indicating that the additional information is transmitted by the second stream when multiplexing the additional information.

11. . A receiver apparatus used in a video distribution system, the receiver apparatus comprising:
acquisition means configured to acquire a first stream and a second stream in multi-stream encoding; and
decoding means configured to decode each of the first stream and the second stream,
wherein the first stream is data obtained by encoding a main video image, and
the second stream is encoded data obtained by encoding a partial presentation area to be presented by being added on the main video image.

12. . The receiver apparatus according to claim 11, wherein
the first stream is a stream of a base layer in the multi-stream encoding,
the second stream is a stream of an enhancement layer in the multi-stream encoding, and
the decoding means combines and decodes the first stream and the second stream.

13. . The receiver apparatus according to claim 11, wherein
the first stream is encoded data of a program video image, and
the second stream is encoded data obtained by encoding the data of the program video image on which additional information is superimposed.

14. . The receiver apparatus according to claim 13, wherein
the decoding means decodes an entire presentation area of the program video image on which the additional information is superimposed by interlayer prediction which refers to a base layer.

15. . The receiver apparatus according to claim 11, wherein
the first stream is encoded data of a program video image, and
the second stream is encoded data obtained by encoding a partial presentation area including additional information to be presented by being added on the program video image independently of a base layer.

16. . The receiver apparatus according to claim 15, wherein
the decoding means
decodes the program video image from the first stream,
decodes the partial presentation area from the second stream, and
outputs a program video image with additional information using the program video image and the partial presentation area.

17. . The receiver apparatus according to claim 15, wherein
the decoding means decodes the partial presentation area by performing at least one of intra prediction and interlayer non-reference inter prediction within the partial presentation area.

18. . The receiver apparatus according to claim 15, wherein
the decoding means decodes a presentation area other than the partial presentation area as an area to refer to the base layer.

19. . The receiver apparatus according to any one of claims 11 to 18, wherein
the acquisition means switches whether or not to acquire the second stream in response to an operation of a viewer.

20. . The receiver apparatus according to any one of claims 11 to 18, wherein
the acquisition means acquires the second stream which transmits the additional information as an essential stream for which it is essential to be decoded on a receiving side.

21. . The receiver apparatus according to claim 20, wherein
the second stream which transmits the additional information is imparted with a predetermined stream number defined as a stream number of the essential stream.

22. . The receiver apparatus according to any one of claims 11 to 18, further comprising
detection means configured to detect a flag multiplexed and transmitted on a transmission side, the flag indicating that the additional information is transmitted by the second bit stream,
wherein the acquisition means acquires the second stream in response to detection of the flag.
